# EUROPEAN PATENT APPLICATION

(11) **EP 4 435 898 A1**
(43) Date of publication of application: **25.09.2024**
(21) Application number: 22894669.5
(22) Date of filing: 08.11.2022
(51) Int. Cl.: H01M 4/62, H01M 4/04, H01M 10/0525

(54) **POSITIVE ELECTRODE LITHIUM SUPPLEMENT ADDITIVE AND PREPARATION METHOD THEREFOR, POSITIVE SHEET, AND SECONDARY BATTERY**

(30) Priority: 18.11.2021 CN 202111372235
(71) Applicant: Shenzhen Innovazone Technology Co., Ltd., Shenzhen, Guangdong 518000 (CN)
(72) Inventor: YU, Yonglong, Shenzhen, Guangdong 518000 (CN); WAN, Yuanxin, Shenzhen, Guangdong 518000 (CN); KONG, Lingyong, Shenzhen, Guangdong 518000 (CN); ZHONG, Zeqin, Shenzhen, Guangdong 518000 (CN); ZHAO, Zhongke, Shenzhen, Guangdong 518000 (CN); WANG, Min, Shenzhen, Guangdong 518000 (CN)
(74) Representative: Di Giovine, Paolo
(86) International application number: PCT/CN2022/130559
(87) International publication number: WO 2023/088132

(57) **Abstract**

The present invention belongs to the technical field of battery materials, and relates to a positive electrode lithium supplement additive and a preparation method therefor, a positive sheet, and a secondary battery. The positive electrode lithium supplement additive comprises a Li₈FePO₄ core and an insulated conductive packaging layer coating the outer surface of the core. The positive electrode lithium supplement additive comprises the Li₈FePO₄ core and the insulated conductive packaging layer, so that the lithium supplement capacity is relatively good, and active lithium ions consumed due to formation of a SEI film during first charging of the battery are supplemented; moreover, lithium ions in Li₈FePO₄ can also serve as a positive electrode material to participate in lithium ion circulation in the battery. Moreover, no gas is generated during delithiation, the conductive performance is good, the lithium supplementing effect on a positive electrode is good, the safety is high, and the electrochemical properties such as the capacity retention rate, the cycle life and the safety of the positive sheet can be effectively improved.

## Description

This application claims the benefit of Chinese patent application No. 202111372235.X, titled "Cathode lithium-supplementing additive and Preparation Method Therefor, Cathode Sheet, and Secondary Battery" filed on November 18, 2021, the contents of which are incorporated herein by reference.

### TECHNICAL FIELD

The present application relates to the technical field of battery materials, in particular, to a cathode lithium-supplementing additive and a preparation method therefor, a cathode sheet and a secondary battery.

### BACKGROUND

With the rapid development of energy storage technology and the increasing use of portable digital devices and vehicle power supplies, higher and higher requirements are raised for the energy density of batteries and the development of large-capacity, long-life and high safety secondary batteries is inevitable. During the first charge and discharge process of a lithium-ion battery, an SEI film will be formed at the interface of the anode material. Research shows that the components of SEI are mainly lithium salt materials such as LiF, Li₂CO₃, R-COOLi, and R-CH₂OLi. The formation of SEI is an irreversible process. The Li⁺ used to form SEI can no longer be embedded into the cathode material during the discharge process, resulting in a loss of battery capacity.

It is found that part of Li⁺ in the cathode material will be consumed during the formation of SEI film, thereby causing irreversible capacity loss of the electrode material. Therefore, this capacity loss can be compensated by lithium pre-replenishment. There are two main types of lithium pre-replenishment technology. One is the lithium supplement for anode materials. This has high requirements on the operating environment, and the lithium supplement agent is generally metal lithium foil and inert lithium powder. The other is the lithium supplement for cathode materials. The requirements for this are relatively low, the method is simple, and the lithium supplement agent generally employs the anti-fluorite structure lithium-rich cathode material Li_{X}MO₄ (M= Fe, Co, Mn). Lithium ferrite (Li₅FeO₄) is commonly used in existing lithium-supplementing materials, it has a theoretical capacity of 865 mAh/g and high lithium-supplementing capacity. However, the Li₅FeO₄ lithium-supplementing material will produce gas during the charging process, which affects the safety performance of the battery.

### SUMMARY

### TECHNICAL PROBLEM

An objective of the embodiments of the present application is to provide a cathode lithium-supplementing additive and a preparation method therefor, as well as a cathode sheet and a secondary battery, to at least solve the problem of gas production during the charging process in the existing Li₅FeO₄lithium supplement materials.

### SOLUTION TO THE PROBLEM

### TECHNICAL PROPOSALS

In order to solve the above technical problems, the technical proposals adopted in the embodiments of this application are:

In a first aspect, the present application provides a cathode lithium-supplementing additive, which includes a Li₈FePO₄ core and an isolating conductive encapsulation layer coating the outer surface of the core.

In a second aspect, the present application provides a preparation method for a cathode lithium-supplementing additive, which includes the following steps:
preparing a Li₈FePO₄ material under an inert atmosphere; and
encapsulating, under an inert atmosphere, the Li₈FePO₄ material and forming an isolating conductive encapsulation layer on a surface of the Li₈FePO₄ material to obtain a cathode lithium-supplementing additive having a core-shell structure.

In a third aspect, the present application provides a cathode sheet, which includes the above-mentioned cathode lithium-supplementing additive, or a cathode lithium-supplementing additive prepared by the above method.

In a fourth aspect, the present application provides a secondary battery, which includes the above-mentioned cathode sheet.

The advantageous effects of the cathode lithium-supplementing additive provided by the embodiments of this application are that: the Li₈FePO₄ core has excellent specific capacity, the theoretical capacity can reach 1036 mAh/g, and the theoretical cycle capacity can be retained at 129.5 mAh/g, which has a better lithium supplementing effect. Lithium ions can be decomposed as an irreversible lithium source, compensating for the active lithium ions consumed due to the formation of the SEI film when the battery is first charged and increasing the initial capacity of the cathode. The generated FePO₄ can be combined with lithium ions again, forming lithium iron phosphate, which can be used as a cathode material and participate in the intercalation and deintercalation of lithium ions during the charge and discharge cycles of the battery to improve the capacity and capacity retention rate of the cathode. In the Li₈FePO₄ material, the valency of phosphorus is -3. During the charging and lithium deintercalation process, phosphorus ions are oxidized instead of oxygen ions, and the product is a solid instead of oxygen. Therefore, the cathode lithium-supplementing additive does not produce gas during the lithium deintercalation process, thereby improving the cycle stability and safety of the battery. The isolating conductive encapsulation layer coating the outer surface of the core can not only improve the conductivity of the cathode lithium-supplementing additive, but also provide encapsulation to the Li₈FePO₄ core, isolating water, oxygen, etc. in the atmosphere from contacting and reacting with the Li₈FePO₄ material, preventing oxygen from oxidizing phosphorus ions with the valency of -3 in Li₈FePO₄, and avoiding moisture from reacting with Li₈FePO₄ to generate lithium hydroxide, and so on.

The advantageous effects of the preparation method for the cathode lithium-supplementing additive provided by the embodiments of the present application are that, in order to prevent carbon dioxide, oxygen, moisture, and the like from contacting and reacting with the raw material components to destroy the raw materials, the Li₈FePO₄ material is prepared under an inert atmosphere. At the same time, in order to prevent carbon dioxide from reacting with the Li₈FePO₄ material to form lithium carbonate, avoid oxygen from oxidizing the phosphorus ions with the valency of -3 in the Li₈FePO₄ material, and avoid moisture from reacting with the Li₈FePO₄ material to form lithium hydroxide, Li₈FePO₄ material is is also encapsulated in an inert atmosphere after being prepared to form an isolating conductive encapsulation layer is formed on the surface of the Li₈FePO₄ material to obtain cathode lithium-supplementing additive having a core-shell structure. The prepared cathode lithium-supplementing additive includes a Li₈FePO₄ core and an isolating conductive encapsulation layer. It not only has a good lithium supplementing capacity, but also compensates for the active lithium ions consumed due to the formation of the SEI film when the battery is first charged. At the same time, lithium ions in Li₈FePO₄ can also be used as cathode materials to participate in the cycling of lithium ions in the battery. No gas is produced during the lithium deintercalation process, the electrical conductivity is excellent, and the lithium supplementing effect for the cathode is good with good safety. The electrochemical properties of the cathode sheet such as capacity retention rate cycle life, safety, and the like can be effectively improved.

The advantageous effects of the cathode sheet provided by the embodiment of the present application are that: since it contains the above-mentioned cathode lithium-supplementing additive, which includes a Li₈FePO₄ core and an isolating conductive encapsulation layer, it has a better lithium supplement capacity, no gas will be produced during the lithium deintercalation process, and the electrical conductivity is good. Therefore, the lithium supplementing effect for the cathode sheet is excellent and safe, and can effectively improve the electrochemical performance such as capacity retention, cycle life, and safety of the cathode sheet.

The advantageous effects of the secondary battery provided by the embodiments of the present application are that: since it includes the above-mentioned cathode sheet, the cathode sheet includes the above-mentioned cathode lithium additive including a Li₈FePO₄ core and isolating conductive encapsulation layer, which can effectively compensate for the active lithium ions consumed due to the formation of the SEI film when the battery is first charged, effectively maintaining the specific capacity and improve the capacity retention rate of the cathode sheet. Therefore, the secondary battery provided by the present application has high energy density and good capacity retention rate.

### ADVANTAGEOUS EFFECT OF THE INVENTION

### BRIEF DESCRIPTION OF THE DRAWINGS

### DESCRIPTION OF THE DRAWINGS

In order to more clearly illustrate the technical proposals in the embodiments of the present application, the drawings to be used in the description of the embodiments or exemplary technologies will be briefly introduced below. Apparently, the drawings in the following description are only some embodiments of the present application, for those of ordinary skill in the art, other drawings can be obtained based on these drawings without exerting creative efforts.

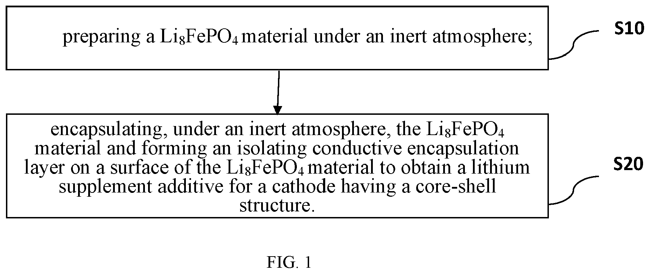

FIG. 1 is a schematic flow chart of the preparation method for a cathode lithium-supplementing additive provided by an embodiment of the present application.

### EMBODIMENTS OF THE INVENTION

### DETAILED DESCRIPTION OF THE EMBODIMENTS

In order to make the purpose, technical proposals and advantages of the present application more clear, the present application will be further described in detail below with reference to the drawings and embodiments. It should be understood that the specific embodiments described here are only used to explain the present application and are not used to limit the present application.

A first aspect of the embodiments of the present application provides a cathode lithium-supplementing additive, which includes a Li₈FePO₄ core and an isolating conductive encapsulation layer coating an outer surface of the core.

The cathode lithium-supplementing additive provided in the first aspect of the embodiment of the present application includes a Li₈FePO₄ core and an isolating conductive encapsulation layer coating the outer surface of the core. The Li₈FePO₄ core, on the one hand, has excellent specific capacity, the theoretical capacity can reach 1036 mAh/g, and the theoretical cycling capacity can be retained at 129.5 mAh/g, which can achieve a better lithium supplementing effect. It can not only decompose lithium ions as an irreversible lithium source, but also compensate for consumed active lithium ions caused by the formation of SEI film when the battery is first charged, Li₈FePO₄ -8e⁻ →8Li⁺ +FePO₄, the initial capacity of the cathode can be increased. The generated FePO₄ can be combined with lithium ions again to form lithium iron phosphate, FePO₄ +Li⁺ + e⁻ →LiFePO₄, lithium iron phosphate can be used as a cathode material, participating in the lithium ion deintercalation cycle during charge and discharge cycles of the battery, improving the capacity and capacity retention rate of the cathode. On the other hand, in the Li₈FePO₄ material, phosphorus has a valency of -3. During the charging and deintercalation process, phosphorus ions are oxidized instead of oxygen ions, and the product is a solid instead of oxygen. Therefore, the cathode lithium-supplementing additive does not produce gas during the lithium deintercalation process, which improves the cycle stability and safety of the battery. In addition, the isolating conductive encapsulation layer coating the outer surface of the core can not only improve the conductivity of the cathode lithium-supplementing additive, but can encapsulate the Li₈FePO₄ core, isolating water, oxygen, etc. in the atmosphere from contacting and reacting with Li₈FePO₄ material, preventing oxygen from oxidizing phosphorus ions with the valency of -3 in Li₈FePO₄, and avoiding moisture from reacting with Li₈FePO₄ to generate lithium hydroxide, and so on. The embodiments of this application include a cathode lithium-supplementing additive with a Li₈FePO₄ core and an isolating conductive encapsulation layer. It not only has a good lithium supplement capacity, but also does not produce gas during the lithium deintercalation process. It has excellent conductivity, good lithium supplement effect on the cathode, good safety, and can effectively improve the electrochemical performance such as capacity retention, cycle life, and safety of the cathode sheet.

In some embodiments, the particle size of the Li₈FePO₄ core is 0.1-3 µm; this particle size is not only conducive to the deintercalation of lithium ions, having a better lithium supplementing effect, but is also conducive to maintaining characteristic of the Li₈FePO₄ material. The smaller the particle size of the Li₈FePO₄ material, the smaller the polarization of the material, and the greater the active specific surface area, which is more conducive to the intercalation and deintercalation of lithium ions, and improves the lithium supplementing effect. If the particle size is too large, the polarization of the material will increase, which is not conducive to the deintercalation of lithium ions and reduces the lithium supplementing effect; if the particle size is too small, the material will agglomerate, and the specific surface area of the material will be too large, and the contact area with air and moisture also increases, so that the stability of the Li₈FePO₄ material decreases, and it is easy to deteriorate. In some specific embodiments, the particle size of the Li₈FePO₄ core includes but is not limited to 0.1-0.5 µm, 0.5-1 µm, 1-2 µm, 2-3 µm, and so on.

In some embodiments, in the cathode lithium-supplementing additive, the mass percentage of the isolating conductive encapsulation layer is 0.5-5%; this thickness of the isolating conductive encapsulation layer can effectively isolate moisture and oxygen in the air etc. from contacting the Li₈FePO₄ core and affecting the material properties; it does not reduce the lithium supplementing capacity of the cathode. If the mass percentage of the isolating conductive encapsulation layer is too high, the proportion of Li₈FePO₄ lithium supplementing material in the additive will be reduced, thereby reducing the lithium supplementing capacity of the additive; if the mass percentage of the isolating conductive encapsulation layer is too low, the encapsulation effect of the Li₈FePO₄ core is poor, and the Li₈FePO₄ core material has the risk of deterioration due to contact with the atmosphere. In some specific embodiments, in the cathode lithium-supplementing additive, the mass percentage of the isolating conductive encapsulation layer includes but is not limited to 0.5-1%, 1-2%, 2-3%, 3-4%, 4-5% and so on.

In some embodiments, the total thickness of the isolating conductive encapsulation layer is 1-500 nm. This thickness can effectively isolate moisture and oxygen in the air from contacting the Li₈FePO₄ core and destroy the material properties; and it will not reduce the lithium supplementing capacity of the cathode. If the total thickness of the isolating conductive encapsulation layer is too thick, the proportion of Li₈FePO₄ lithium supplementing material in the additive will be reduced, thereby reducing the lithium supplementing capacity of the additive; if the total thickness of the isolating conductive encapsulation layer is too low, the encapsulation effect of the Li₈FePO₄ core is poor, and the Li₈FePO₄ core material has the risk of deterioration due to the contact with the atmosphere. In some embodiments, the total thickness of the isolating conductive encapsulation layer includes but is not limited to 1-100 nm, 100-200 nm, 200-300 nm, 300-400 nm, 400-500 nm, and so on.

In some embodiments, the isolating conductive encapsulation layer includes an isolating encapsulation layer and an ionic conductor encapsulation layer and/or an electronic conductor encapsulation layer. In the isolating conductive encapsulation layer in the embodiment of the present application, the isolating encapsulation layer can effectively isolate moisture, oxygen, etc. from contact with the Li₈FePO₄ core material and damaging the material properties, which improves the stability of the core-shell cathode lithium-supplementing additive, and achieves a stable lithium supplement effect. Moreover, the ionic conductor encapsulation layer and the electronic conductor encapsulation layer can improve the electronic and ionic conductivities of the Li₈FePO₄ core material and improve the intercalation of lithium during the charging process; at the same time, during the lithium supplementing process or after the lithium supplementation is completed, the isolating conductive encapsulation layer can act as a conductive agent and continue to undertake the conductive function in the electrode system.

In some embodiments, the isolating conductive encapsulation layer may be a composite laminated structure of an isolating encapsulation layer and an electronic conductor encapsulation layer. The structure is such that the isolating encapsulation layer is coated on the outer surface of the lithium-supplementing material core, and the electronic conductor encapsulation layer is coated on the outer surface of the isolating encapsulation layer. It can also be a composite laminated structure of an isolating encapsulation layer and an ionic conductor encapsulation layer. The structure is such that the isolating encapsulation layer is coated on the outer surface of the lithium-supplementing material core, and the ionic conductor encapsulation layer is coated on the outer surface of the isolating encapsulation layer. It can also be a composite laminated structure of an isolating encapsulation layer, an electronic conductor encapsulation layer and an ionic conductor encapsulation layer. The structure is such that the isolating encapsulation layer is coated on the outer surface of the lithium-supplementing material core, the ionic conductor encapsulation layer is coated on the outer surface of the isolating encapsulation layer, and the electronic conductor encapsulation layer is coated on the outer surface of the ionic conductor encapsulation layer; or the isolating encapsulation layer is coated on the outer surface of the lithium-supplementing material core, the electronic conductor encapsulation layer is coated on the outer surface of the isolating encapsulation layer, and the ionic conductor encapsulation layer is coated on the outer surface of the electronic conductor encapsulation layer.

In some embodiments, the isolating encapsulation layer completely encapsulates the lithium-supplementing material core to protect it from contact with water and carbon dioxide in the environment. In some embodiments, the material of the isolating encapsulation layer includes at least one of ceramics, high molecular polymers, or carbon materials. In some specific embodiments, the ceramic includes at least one of Al₂O₃, SiO₂, boehmite, Si₃N₄, SiC, and BN. In some specific embodiments, the polymer includes one or more of an organic polymer with a structure of [C₆H₇O₆Na]ₙ, an organic polymer with a structure of [C₆H₇O₂(OH)₂OCH₂COONa]ₙ, an organic polymer with a structure of [C₃H₄O₂]ₙ, an organic polymer with a structure of [C₃H₃O₂Mₐ]ₙ, an organic polymer with a structure of [C₃H₃N]ₙ, an organic polymer containing a structure of - [CH₂-CF₂]ₙ-, an organic polymer containing a structure of -[NHCO]-, an organic polymer containing an imide ring -[CO-N-CO]- on the main chain, and polyvinylpyrrolidone, where Mₐ is an alkali metal element. Specifically, polymers include one or more of polyvinylidene fluoride, sodium alginate, sodium carboxymethylcellulose, polyacrylic acid, polyacrylate, polyacrylonitrile, polyamide, polyimide, polyvinylpyrrolidone, polyethylene oxide (PEO), polypyrrole (PPy), polytetrafluoroethylene (PTFE), and polyurethane (PU). The polymer includes one or more of sodium carboxymethyl cellulose and polyacrylic acid. Sodium carboxymethyl cellulose and polyacrylic acid are two-dimensional polymers with good bonding effect and can effectively coat the core of a lithium-rich material, thereby avoiding contact between the core of a lithium-rich material and the air and improving stability of the lithium supplementation additive. In the embodiment of the present application, the molecular weight of the polymer is greater than or equal to 100,000. The molecular weight of the polymer may specifically be, but is not limited to, 100,000, 150,000, 200,000, 300,000, 500,000 or 1,000,000. The greater the molecular weight of the polymer, the higher the density and structural strength of the polymer layer, which is more conducive to the protection of the core of the lithium-rich material. In some specific embodiments, the carbon material includes at least one of graphene, carbon nanotubes, amorphous carbon, graphite, and carbon black.

In some embodiments, the thickness of the isolating encapsulation layer is 1-200 nm; in some specific embodiments, the thickness of the isolating encapsulation layer is 5-50 nm. By adjusting the material and thickness of the isolating encapsulation layer, embodiments of the present application can better prevent water and carbon dioxide from contacting the lithium source core, and improve the stability of the lithium source core.

In some embodiments, the electronic conductor encapsulation layer can enhance the electronic conductivity of the encapsulation layer, thereby enhancing the electronic conductivity of the lithium-supplementing additive, which is beneficial to reducing the internal impedance of the electrode. In some embodiments, the material of the electronic conductor encapsulation layer includes at least one of a carbon material, a conductive polymer, or a conductive oxide. In some specific embodiments, the carbon material includes at least one of mesoporous carbon, carbon nanotubes, graphite, carbon black, graphene, etc. The conductive polymer may be, but is not limited to, the conductive polymers contained in the above isolating encapsulation layer. The conductive oxide includes at least one of In₂O₃, ZnO, and SnO₂.

In some embodiments, the electronic conductor encapsulation layer has a thickness of 5-200 nm. In some embodiments, the electronic conductor encapsulation layer has a thickness of 5-50 nm. Embodiments of the present application can improve the electronic conductivity of the cathode lithium-supplementing additive by adjusting the thickness of the electronic conductor encapsulation layer.

In some embodiments, the ionic conductor encapsulation layer can enhance the ion conductivity of the cathode lithium-supplementing additive, thereby enhancing the ion conductivity of the lithium-supplementing additive and facilitating the outward transport of lithium ions from the core of the lithium supplement material. In some embodiments, the material of the ionic conductor encapsulation layer includes at least one of a perovskite, NASICON, garnet or polymer solid electrolyte. In some specific embodiments, the perovskite electrolyte includes Li₃ₓLa_{2/3-x}TiO₃ (LLTO), such as at least one of Li_{0.5}La_{0.5}TiO₃, Li_{0.33}La_{0.57}TiO₃, Li_{0.29}La_{0.57}TiO₃, Li_{0.33}Ba_{0.25}La_{0.39}TiO₃, (Li_{0.33}La_{0.56})_{1.005}Ti_{0.99}Al_{0.01}O₃, and Li_{0.5}La_{0.5}Ti_{0.95}Zr_{0.05}O₃. The NASICON electrolyte includes, but is not limited to, Li_{1.4}Al_{0.4}Ti_{1.6}(PO₄)₃(LATP). The garnet electrolyte includes at least one of Li₇La₃Zr₂O₁₂ (LLZO), Li_{6.4}La₃Zr_{1.4}Ta_{0.6}O₁₂, and Li_{6.5}La₃Zr_{1.5}Ta_{0.5}O₁₂. The polymer electrolyte includes at least one of PEO/PPO/PVDF and the like in which lithium salts are dissolved.

In some embodiments, the ionic conductor encapsulation layer has a thickness of 5-200 nm. In some embodiments, the thickness of the ionic conductor encapsulation layer is 5-50 nm. Embodiments of the present application can improve the ion conductivity of the cathode lithium-supplementing additive by adjusting the thickness and material of the ionic conductor encapsulation layer.

The cathode lithium-supplementing additive in the embodiments of this application can be prepared by the following example method.

As shown in FIG. 1, a second aspect of the embodiments of the present application provides a method for preparing a cathode lithium-supplementing additive, which includes the following steps:
in step S10: preparing a Li₈FePO₄ material under an inert atmosphere; and
in step S20: encapsulating, under an inert atmosphere, the Li₈FePO₄ material and forming an isolating conductive encapsulation layer on a surface of the Li₈FePO₄ material to obtain a cathode lithium-supplementing additive having a core-shell structure.

In the preparation method for the lithium additive for a cathode provided in the second aspect of the embodiment of the present application, in order to prevent carbon dioxide, oxygen, moisture, and the like from contacting and reacting with the raw material components and destroying the raw materials, the Li₈FePO₄ material is prepared under an inert atmosphere. At the same time, in order to prevent carbon dioxide from reacting with the Li₈FePO₄ material to form lithium carbonate, avoid oxygen from oxidizing the phosphorus ions with the valency of -3 in the Li₈FePO₄ material, and avoid moisture from reacting with the Li₈FePO₄ material to form lithium hydroxide, Li₈FePO₄ material is also encapsulated in an inert atmosphere after being prepared to form an isolating conductive encapsulation layer is formed on the surface of the Li₈FePO₄ material to obtain cathode lithium-supplementing additive having a core-shell structure. The prepared cathode lithium-supplementing additive includes a Li₈FePO₄ core and an isolating conductive encapsulation layer. It not only has a good lithium supplementing capacity, but also compensates for the active lithium ions consumed due to the formation of the SEI film when the battery is first charged. At the same time, lithium ions in Li₈FePO₄ can also be used as cathode materials to participate in the cycling of lithium ions in the battery. No gas is produced during the lithium deintercalation process, the electrical conductivity is excellent, and the lithium supplementing effect for the cathode is good with good safety. The electrochemical properties of the cathode sheet such as capacity retention rate, cycle life, safety, and the like can be effectively improved.

In some embodiments, in the above step S10, preparing a Li₈FePO₄ material includes the step:

in step S11: dissolving, under an inert atmosphere, raw materials of Li₃P and Li₅FeO₄ into an organic solvent, evenly mixing the raw materials by a grinding and mixing treatment to form a Li₈FePO₄ precursor material, and drying and then sintering to obtain the Li₈FePO₄ material.

In the embodiment of the present application, Li₈FePO₄ material is prepared under inert atmosphere. The Li₃P and Li₅FeO₄ raw materials are dissolved in an organic solvent and the raw materials are evenly mixed through a grinding and mixing process to form a Li₈FePO₄ precursor material, and are dried to remove the solvent, then the precursor undergoes a hightemperature reaction through sintering to generate the Li₈FePO₄ material.

In some embodiments, the step of dissolving Li₃P and Li₅FeO₄ into the organic solvent includes: dissolving Li₃P and Li₅FeO₄ into the organic solvent according to a stoichiometric ratio of Li₈FePO₄ to ensure the ratio of raw materials required for the formation of the Li₈FePO₄ material, avoiding the risk of increased by-products caused by excessive amount of a certain element in raw materials. In some specific embodiments, Li₃P and Li₅FeO₄ are dissolved into an organic solvent at a molar ratio of 1:1 for preparing the Li₈FePO₄ material.

In some embodiments, the organic solvent is selected from at least one of butyl acetate, cyclohexane, and N-methylpyrrolidone; these organic solvents have good solubility for raw material components of Li₃Pand Li₅FeO₄,which is conducive to the uniform mixing of the raw material components of Li₃P and Li₅FeO₄ through the liquid phase to form the Li₈FePO₄ precursor material.

In some embodiments, the conditions for the grinding and mixing treatment include: ball milling the mixed organic solution of Li₃P and Li₅FeO₄ for 1 to 20 hours under a ball-to-material ratio of (1-10):1, so that Li₃P and Li₅FeO₄ are fully mixed and contacted to form a Li₈FePO₄ precursor material, which provides a basis for subsequent sintering to prepare the Li₈FePO₄ material.

In some embodiments, the sintering treatment conditions include: sintering in an inert atmosphere at a temperature of 500-900°C for 3 to 12 hours; converting the Li₈FePO₄ precursor material into the Li₈FePO₄ material. If the temperature is too high, it is easy to cause the Li₈FePO₄ material particles to be too large, thereby increasing the polarization of the material, which is not conducive to the deintercalation of lithium ions; if the temperature is too low, it is difficult to form a crystal form of the Li₈FePO₄ material. In some specific embodiments, the sintering temperature includes but is not limited to 500°C-600°C, 600-700°C, 700-800°C, 800-900°C, and so on; the sintering time includes but is not limited to 3-12 hours, 5-10 hours, 6-8 hours, and so on.

In some embodiments, before coating the Li₈FePO₄ material, the method also includes crushing the Li₈FePO₄ material into small particle sizes, which is beneficial to reducing the polarization of the material and increasing the active specific surface area of the material, thus it is more conducive to the deintercalation of lithium ions, thereby increasing the lithium supplementing capacity of the additive.

In some embodiments, the Li₈FePO₄ material is crushed into particles with a particle size of 0.1-3 µm; this particle size is not only conducive to the deintercalation of lithium ions, having a better lithium supplementing effect, but is also conducive to maintaining properties of the Li₈FePO₄ material. The smaller the particle size of the Li₈FePO₄ material, the smaller the polarization of the material, and the larger the active specific surface area, which is more conducive to the intercalation and deintercalation of lithium ions, and improves the lithium supplementing effect. However, if the particle size is too small, the material will agglomerate, and the specific surface area of the material will be too large, and the contact area with air and moisture also increases, so that the stability of the Li₈FePO₄ material decreases, and it is easy to deteriorate. In some specific embodiments, the Li₈FePO₄ material is crushed into particles with particle sizes of 0.1-0.5 µm, 0.5-1 µm, 1-2 µm, 2-3 µm, and so on.

The Li₈FePO₄ material prepared in the embodiment of the present application has the characteristics of being sensitive to water, oxygen, and carbon dioxide. The prepared Li₈FePO₄ material is stored in the following conditions to improve the stability of the lithium supplementing performance of the Li₈FePO₄ material: the relative humidity ≤ 5% in a storage environment at 25°C, that is, the dew point temperature ≤ -15°C; specifically, the relative humidity ≤ 1% in the environment, that is, the dew point temperature ≤ -30°C; more specifically, the relative humidity ≤ 0.1% in the environment, that is, the dew point temperature ≤ -50°C; carbon dioxide content ≤ 200 ppm in the storage environment at 25°C; specifically, carbon dioxide content ≤ 100 ppm; more specifically, carbon dioxide content ≤ 50 ppm.

In some embodiments, in the above step S20, the step of forming an isolating conductive encapsulation layer on the surface of the Li₈FePO₄ material includes: forming an isolating encapsulation layer and an ionic conductor encapsulation layer and/or an electronic conductor encapsulation layer on the surface of the Li₈FePO₄ material. The isolating conductive encapsulation layer on the surface of Li₈FePO₄ material can be formed by chemical deposition, carbon source coating followed by carbonization treatment, magnetron sputtering or atomic layer deposition.

In some embodiments, the material for preparing the isolating encapsulation layer includes at least one of ceramics, high molecular polymers, or carbon materials, and the thickness of the isolating encapsulation layer is 5-200 nm.

In some specific embodiments, when the material of the isolating encapsulation layer is a ceramic layer, magnetron sputtering may be used to sputter the ceramic target material on the surface of the lithium source particles to deposit the ceramic isolating encapsulation layer, but is not limited thereto. The conditions for magnetron sputtering are adjusted according to the specific target properties.

In another specific embodiment, when the material of the isolating encapsulation layer is a polymer layer, the step of forming the polymer isolating encapsulation layer may be: dispersing the lithium source particulate material in a solution containing a polymer, and then vacuum dried to form a dense polymer isolating encapsulation layer on the surface of the lithium source particles. The solvent of the solution is a solvent that can uniformly disperse or dissolve the high molecular polymer, such as one or more of N-methylpyrrolidone, methanol, ethanol, isopropyl alcohol, acetone, tetrahydrofuran and diethyl ether.

In another specific embodiment, when the material of the isolating encapsulation layer is a carbon material layer, the method of forming the carbon material isolating encapsulation layer includes the following steps: dispersing the lithium source particulate material in a solution containing the carbon source, and then drying, followed by a carbonization treatment to form a dense carbon isolating encapsulation layer on the surface of lithium source particles. The carbon source may be but not limited to PEO, and may also be other carbon sources. Any carbon source that can form a carbon coating layer on the surface of lithium source particles is suitable for this application. Specifically, the lithium source particulate material and PEO are mixed evenly, reaching the melting point of PEO at 300°C, and PEO is evenly coated on the surface of the lithium source particles. The coated material is sintered in an inert atmosphere at 600°C and held for 16 hours. After sintering is completed, a dense carbon layer is formed. In some specific embodiments, the step of forming a conductive carbon layer on the surface of the Li₈FePO₄ material includes: carrying out the carbon coating treatment on the Li₈FePO₄ material using chemical vapor deposition.

In some specific embodiments, the step of carbon coating treatment includes: in an inert atmosphere mixed with carbon source gas, heating the Li₈FePO₄ material at a temperature of 500-800°C for 0.5 to 3 hours to obtain carbon-coated Li₈FePO₄ composite material; the carbon source is selected from: at least one of acetylene, ethylene, hexane, methane, propylene, and butane; the volume percentage of the carbon source gas in the inert atmosphere mixed with the carbon source gas is 0.1-50%. In other specific embodiments, Li₈FePO₄ material particles are mixed evenly with a carbon source, the carbon source being at least one of glucose, sucrose, starch, polyethylene glycol, graphene, carbon nanotubes, graphite and carbon black, and is placed in an atmosphere furnace, while nitrogen gas is continuously introduced, rising from room temperature to 500-800°C, and kept at a constant temperature for 2 to 6 hours to form an encapsulating conductive carbon layer.

In some embodiments, the material for preparing the electronic conductor encapsulation layer includes at least one of carbon materials, conductive polymers, or conductive oxides; carbon materials, conductive polymers, and conductive oxides are all as the materials of the electronic conductor encapsulation layer contained in the lithium-supplementing additives mentioned above. The thickness of the electronic conductor encapsulation layer is 5-200 nm. The method and conditions for forming the electronic conductor encapsulation layer of the carbon material, the conductive polymer and the conductive oxide are based on the method of forming the carbon material, the conductive polymer or the conductive oxide. In some specific embodiments, the electronic conductor encapsulation layer may be formed by chemical deposition, magnetron sputtering or atomic layer deposition to form the isolating conductive encapsulation layer. In some specific embodiments, magnetron sputtering or atomic layer deposition is used to deposit a conductive oxide on the outer surface of Li₈FePO₄ material particles, where the conductive oxide includes at least one of In₂O₃, ZnO, and SnO₂, to form an encapsulating conductive oxide layer.

In some embodiments, the material for preparing the ionic conductor encapsulation layer includes at least one of a perovskite, NASICON, garnet or polymer solid electrolyte; the thickness of the ionic conductor encapsulation layer is 5-200 nm. The method and conditions of forming the ionic conductor encapsulation layer are specifically based on the method of forming a perovskite-type, NASICON-type, garnet-type or polymer-type solid electrolyte.

In some embodiments, in the cathode lithium-supplementing additive, the mass percentage of the isolating conductive encapsulation layer is 0.5-5%.

In some embodiments, the total thickness of the isolating conductive encapsulation layer is 1-500 nm.

The effects of the above-mentioned embodiments of the present application have been discussed in detail in the foregoing text, and will not be repeated here.

A third aspect of the embodiments of the present application provides a cathode sheet, which includes the above-mentioned cathode lithium-supplementing additive, or a cathode lithium-supplementing additive prepared by the above method.

The cathode sheet provided in the third aspect of the embodiment of the present application contains the above-mentioned cathode lithium-supplementing additive, which includes a Li₈FePO₄ core and an isolating conductive encapsulation layer, it has a better lithium supplement capacity, no gas will be produced during the lithium deintercalation process, and the electrical conductivity is good. Therefore, the lithium supplementing effect for the cathode sheet is excellent and safe, and can effectively improve the electrochemical performance such as capacity retention, cycle life, and safety of the cathode sheet.

In some embodiments, the cathode sheet includes a current collector and an active material layer stacked together. The mass percentage of the cathode lithium-supplementing additive in the active material layer is 0.2-10%. This ratio can just compensate for the initial loss of active lithium during first charging of the battery. Since most of the lithium provided by the cathode lithium supplement cannot be circulated during battery operation, if the amount of cathode lithium-supplementing additive in the cathode sheet is too high, too much lithium will cause lithium ions to precipitate on the surface of the anode during battery operation, forming lithium dendrites; if the amount of cathode lithium-supplementing additive in the cathode sheet is too low, the active lithium lost in the cathode material cannot be fully replenished, which is not conducive to improving the energy density and capacity retention rate of the battery. In some specific embodiments, the mass percentage of the cathode lithium-supplementing additive in the active material layer of the cathode sheet includes but is not limited to 0.2-1%, 1-2%, 2-5%, 5-8%, 8-10 % and the like.

In some embodiments, the cathode active material in the cathode sheet includes, but is not limited to, at least one of lithium iron phosphate, lithium cobalt oxide, lithium iron phosphate, lithium iron manganese phosphate, lithium manganate, lithium nickel cobalt manganate, and lithium nickel manganate. These cathode materials have high specific capacity, which is beneficial to improving the energy density of the battery.

In some embodiments, the cathode current collector includes, but is not limited to, any one of copper foil and aluminum foil.

In some embodiments, the cathode active layer also includes components such as conductive agents and adhesives. The materials are not specifically limited in embodiments of this application, and appropriate materials can be selected according to practical application requirements.

In some embodiments, the content of the binder in the cathode active layer is 2 wt%-4 wt%. In specific embodiments, the content of the binder may be but not limited to 2wt%, 3wt%, 4wt% and the like. In specific embodiments, the binder includes one or more of polyvinylidene chloride, soluble polytetrafluoroethylene, styrene-butadiene rubber, hydroxypropyl methylcellulose, methylcellulose, carboxymethylcellulose, polyvinyl alcohol, acrylonitrile copolymer, sodium alginate, chitosan and chitosan derivatives.

In some embodiments, the content of the conductive agent in the cathode active layer is 3 wt%-5 wt%. In specific embodiments, the content of the conductive agent can be but not limited to 3wt%, 4wt%, 5wt% and the like. In specific embodiments, the conductive agent includes one or more of graphite, carbon black, acetylene black, graphene, carbon fiber, C60 and carbon nanotubes.

In some embodiments, the preparation process of the cathode sheet is as follows: mixing the cathode active material, the cathode lithium-supplementing additive, the conductive agent and the binder to obtain an electrode slurry, coating the electrode slurry on the current collector, drying, rolling and die-cutting and so on to prepare the cathode sheet.

A fourth aspect of the embodiment of the present application provides a secondary battery, which includes the above-mentioned cathode sheet.

The secondary battery provided in the fourth aspect of the embodiment of the present application includes the above-mentioned cathode sheet, and the cathode sheet includes the above-mentioned cathode lithium additive including a Li₈FePO₄ core and isolating conductive encapsulation layer, which can effectively compensate for the active lithium ions consumed due to the formation of the SEI film during the first charging of the battery, effectively maintaining the specific capacity and improve the capacity retention rate of the cathode sheet. Therefore, the secondary battery provided by the present application has high energy density and good capacity retention rate.

The secondary battery in the embodiment of the present application may be a lithium-ion battery or a lithium-metal battery.

The anode sheet, electrolyte, separator, and the like of the secondary battery in the embodiment of the present application are not specifically limited and can be applied to any battery system.

In order to make the above implementation details and operations of the present application clearly understood by those skilled in the art, and to reflect the significant performance of the cathode lithium-supplementing additive and the preparation method therefore, the cathode sheet, and the secondary battery in the embodiments of the present application, the above technical proposals are illustrate through the following examples.

### Example 1

### A cathode lithium-supplementing additive, the preparation therefor included:

Li₃P and Li₅FeO₄ were dissolved into an organic solvent of butyl acetate in an argon atmosphere according to the stoichiometric ratio of Li₈FePO₄, ball milled for 20 hours at a ball-to-material ratio of 10:1, and dried, then sintered in an argon atmosphere at a temperature of 900°C for 12 hours and then crushed through a 400-mesh sieve to obtain the Li₈FePO₄ material. Then, in an argon atmosphere containing acetylene gas, the Li₈FePO₄ material was kept at a temperature of 800°C for 3 hours to obtain a carbon-coated Li₈FePO₄ composite material, namely the cathode lithium-supplementing additive.

**A lithium-ion battery,** the preparation method therefor included:
①Preparation of the cathode sheet: the cathode lithium-supplementing additive and lithium cobalt oxide were mixed at a mass ratio of 4:95 to obtain a mixture, the mixture was mixed with SP:PVDF at a mass ratio of 95:2:3, ball milled and stirred for 60 minutes; the rotation speed was set to 30 Hz, after homogenization-coating-drying-cutting processes, a cathode sheet was prepared. The cathode sheet was baked in a 100°C vacuum oven to remove traces of water;
② Anode sheet: lithium metal sheet with a diameter of 16 mm;
③Electrolyte: 1 mol/L LiPF₆ solution, the solvent was composed of EC (ethylene carbonate) and DEC (diethyl carbonate) in a volume ratio of 1:1;
④Separator: polypropylene microporous separator.
⑤ Assembly of lithium-ion battery: the lithium-ion battery was assembled in an inert atmosphere glove box according to the assembly sequence of lithium metal sheet-separator-electrolyte-cathode sheet.

### Example 2

### A cathode lithium-supplementing additive, the preparation therefor included:

Li₃P and Li₅FeO₄ were dissolved into an organic solvent of butyl acetate in an argon atmosphere according to the stoichiometric ratio of Li₈FePO₄, ball milled for 20 hours at a ball-to-material ratio of 10:1, and dried, then sintered in an argon atmosphere at a temperature of 600°C for 8 hours and then crushed through a 400-mesh sieve to obtain the Li₈FePO₄ material. Then, in an argon atmosphere containing acetylene gas, the Li₈FePO₄ material was kept at a temperature of 800°C for 3 hours to obtain a carbon-coated Li₈FePO₄ composite material, namely the cathode lithium-supplementing additive.

**A lithium-ion battery,** the preparation method therefor included:
①Preparation of the cathode sheet: the cathode lithium-supplementing additive and lithium cobalt oxide were mixed at a mass ratio of 4:95 to obtain a mixture, the mixture was mixed with SP:PVDF at a mass ratio of 95:2:3, ball milled and stirred for 60 minutes; the rotation speed was set to 30 Hz, after homogenization-coating-drying-cutting processes, a cathode sheet was prepared. The cathode sheet was baked in a 100°C vacuum oven to remove traces of water;
② Anode sheet: lithium metal sheet with a diameter of 16 mm;
③Electrolyte: 1 mol/L LiPF₆ solution, the solvent was composed of EC (ethylene carbonate) and DEC (diethyl carbonate) in a volume ratio of 1:1;
④Separator: polypropylene microporous separator.
⑤ Assembly of lithium-ion battery: the lithium-ion battery was assembled in an inert atmosphere glove box according to the assembly sequence of lithium metal sheet-separator-electrolyte-cathode sheet.

### Example 3

### A cathode lithium-supplementing additive, the preparation therefor included:

Li₃P and Li₅FeO₄ were dissolved into an organic solvent of butyl acetate in an argon atmosphere according to the stoichiometric ratio of Li₈FePO₄, ball milled for 20 hours at a ball-to-material ratio of 10:1, and dried, then sintered in an argon atmosphere at a temperature of 900°C for 12 hours and then crushed through a 400-mesh sieve to obtain the Li₈FePO₄ material. Then, in an argon atmosphere containing acetylene gas, the Li₈FePO₄ material was kept at a temperature of 800°C for 6 hours to obtain a carbon-coated Li₈FePO₄ composite material, namely the cathode lithium-supplementing additive.

**A lithium-ion battery,** the preparation method therefor included:
①Preparation of the cathode sheet: the cathode lithium-supplementing additive and lithium cobalt oxide were mixed at a mass ratio of 4:95 to obtain a mixture, the mixture was mixed with SP:PVDF at a mass ratio of 95:2:3, ball milled and stirred for 60 minutes; the rotation speed was set to 30 Hz, after homogenization-coating-drying-cutting processes, a cathode sheet was prepared. The cathode sheet was baked in a 100°C vacuum oven to remove traces of water;
② Anode sheet: lithium metal sheet with a diameter of 16 mm;
③Electrolyte: 1 mol/L LiPF₆ solution, the solvent was composed of EC (ethylene carbonate) and DEC (diethyl carbonate) in a volume ratio of 1:1;
④Separator: polypropylene microporous separator.
⑤ Assembly of lithium-ion battery: the lithium-ion battery was assembled in an inert atmosphere glove box according to the assembly sequence of lithium metal sheet-separator-electrolyte-cathode sheet.

### Example 4

**A cathode lithium-supplementing additive,** the preparation therefor included:
Li₃P and Li₅FeO₄ were dissolved into an organic solvent of butyl acetate in an argon atmosphere according to the stoichiometric ratio of Li₈FePO₄, ball milled for 20 hours at a ball-to-material ratio of 10:1, and dried, then sintered in an argon atmosphere at a temperature of 900°C for 12 hours and then crushed through a 400-mesh sieve to obtain the Li₈FePO₄ material. Then, in an argon atmosphere containing acetylene gas, the Li₈FePO₄ material was kept at a temperature of 800°C for 3 hours to obtain a carbon-coated Li₈FePO₄ composite material, namely the cathode lithium-supplementing additive.

**A lithium-ion battery,** the preparation method therefor included:
①Preparation of the cathode sheet: the cathode lithium-supplementing additive and lithium cobalt oxide were mixed at a mass ratio of 10:90 to obtain a mixture, the mixture was mixed with SP:PVDF at a mass ratio of 95:2:3, ball milled and stirred for 60 minutes; the rotation speed was set to 30 Hz, after homogenization-coating-drying-cutting processes, a cathode sheet was prepared. The cathode sheet was baked in a 100°C vacuum oven to remove traces of water;
② Anode sheet: lithium metal sheet with a diameter of 16 mm;
③Electrolyte: 1 mol/L LiPF₆ solution, the solvent was composed of EC (ethylene carbonate) and DEC (diethyl carbonate) in a volume ratio of 1:1;
④Separator: polypropylene microporous separator.
⑤ Assembly of lithium-ion battery: the lithium-ion battery was assembled in an inert atmosphere glove box according to the assembly sequence of lithium metal sheet-separator-electrolyte-cathode sheet.

### Comparative Example 1

**A cathode lithium-supplementing additive,** the preparation therefor included:
Li₅FeO₄ with a particle size of about 1 µm was used as the core of the lithium-supplementing additive, the Li₅FeO₄ material was kept at a temperature of 800°C for 3 hours in an argon atmosphere containing acetylene gas to obtain a carbon-coated Li₅FeO₄ composite material, namely the cathode lithium-supplementing additive.

**A lithium-ion battery,** the preparation method therefor included:
①Preparation of the cathode sheet: the cathode lithium-supplementing additive and lithium cobalt oxide were mixed at a mass ratio of 5:95 to obtain a mixture, the mixture was mixed with SP:PVDF at a mass ratio of 95:2:3, ball milled and stirred for 60 minutes; the rotation speed was set to 30 Hz, after homogenization-coating-drying-cutting processes, a cathode sheet was prepared. The cathode sheet was baked in a 100°C vacuum oven to remove traces of water;
② Anode sheet: lithium metal sheet with a diameter of 16 mm;
③Electrolyte: 1 mol/L LiPF₆ solution, the solvent was composed of EC (ethylene carbonate) and DEC (diethyl carbonate) in a volume ratio of 1:1;
④Separator: polypropylene microporous separator.
⑤ Assembly of lithium-ion battery: the lithium-ion battery was assembled in an inert atmosphere glove box according to the assembly sequence of lithium metal sheet-separator-electrolyte-cathode sheet.

In order to verify the progress of the examples of this application, the following performance tests were conducted on the cathode lithium-supplementing additives and lithium-ion batteries prepared in Examples 1 to 4 and Comparative Example 1 respectively.

### Relevant performance tests

### 1. Characterization of cathode lithium-supplementing additives:

The particle sizes of the cathode lithium-supplementing additive prepared in Examples 1 to 3 and Comparative Example 1 were tested respectively, and the thicknesses of the coating shell layers in the cathode lithium-supplementing additives were measured. The test results are shown in Table 1 below:

### Table 1

**[Table 1]**

| | Particle size of cathode lithium-supplementing additive | Thickness of the shell layer in the cathode lithium-supplementing additive |
|---|---|---|
| Example 1 | about 0.6 µm | about 30 nm |
| Example 2 | about 0.9 µm | about 30 nm |
| Example 3 | about 0.6 µm | about 45 nm |
| Comparative Example 1 | about 1 µm | about 30 nm |

### 2. Electrochemical performance test for lithium-ion batteries:

① The specific capacity during first charging of the lithium-ion batteries prepared in Examples 1 to 4 and Comparative Example 1 were tested according to the following method: the batteries were charged to 4.3 V using 0.05 C, held at 4.3 V constant voltage until the current was less than 0.01 C; the first charging specific capacity was tested, the test instrument was the model LANHE-CT3001A battery test cabinet produced by Wuhan Landian Electronics Co., Ltd.
② cycling charge and discharge performance test was carried out under a voltage range of 2-4.2 V and a rate of 0.1 C, and the gas production was observed.

The test results are shown in Table 2 below:

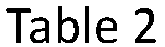

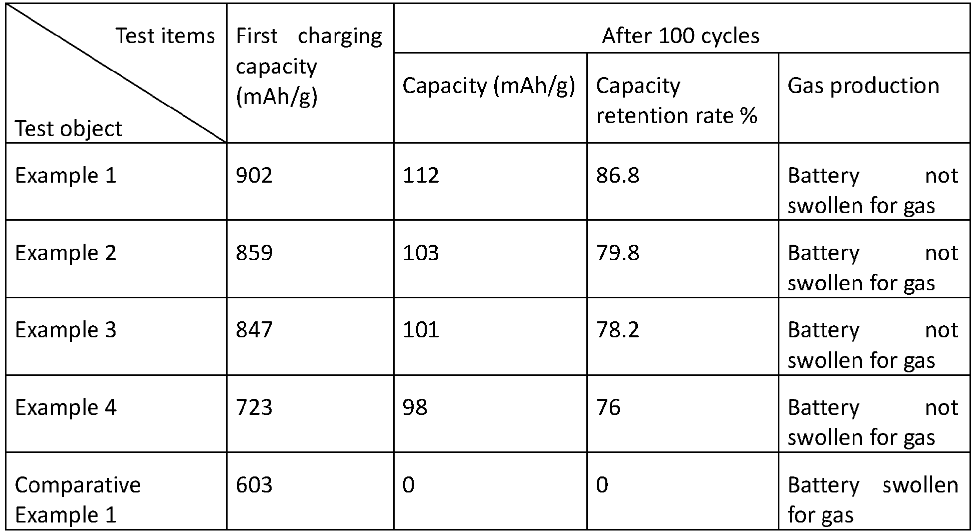

It can be seen from the above test results that the lithium-ion batteries adopting a cathode lithium-supplementing additive including a Li₈FePO₄ core prepared in Examples 1 to 4 of the present application have higher first discharge efficiencies, which are higher than Comparative Example 1. Specifically, the first charging capacity of the lithium-ion battery in Example 1 is 902 mAh/g, the first charging capacity of the lithium-ion battery in Example 2 is 859 mAh/g, and the first charging capacity of the lithium-ion battery in Example 3 is 847 mAh/g. The first charging capacity of the lithium-ion battery in Example 3 is 723 mAh/g.

Furthermore, the lithium-ion batteries adopting a cathode lithium-supplementing additive including a Li₈FePO₄ core prepared in Examples 1 to 4 of the present application still have a higher capacity and a higher battery capacity retention rate after 100 cycles compared with that of the Comparative Example 1. It shows that the lithium-ion batteries prepared by using the cathode lithium-supplementing additive including the Li₈FePO₄ core in the embodiments of the present application have high cycle stability. Moreover, the lithium-ion batteries adopting a cathode lithium-supplementing additive including a Li₈FePO₄ core prepared in Examples 1 to 4 of the present application showed no swelling after 100 cycles, while the ion battery of Comparative Example 1 showed swelling.

The above are only optional embodiments of the present application and are not used to limit the present application. Various modifications and variations may be made to this application by those skilled in the art. Any modifications, equivalent substitutions, improvements, and the like made within the spirit and principles of this application shall be included in the scope of the claims of this application.

## Claims

1. A cathode lithium-supplementing additive, **characterized in that**, comprising a Li₈FePO₄ core and an isolating conductive encapsulation layer coating an outer surface of the core.

2. The cathode lithium-supplementing additive according to claim 1, wherein a particle size of the Li₈FePO₄ core is 0.1 to 3 µm.

3. The cathode lithium-supplementing additive according to claim 1 or 2, wherein, a mass percentage of the isolating conductive encapsulation layer in the cathode lithium-supplementing additive is 0.5 to 5%.

4. The cathode lithium-supplementing additive according to claim 3, wherein a total thickness of the isolating conductive encapsulation layer is 1 to 500 nm.

5. The cathode lithium-supplementing additive according to claim 3, wherein the isolating conductive encapsulation layer includes an isolating encapsulation layer and an ionic conductor encapsulation layer and/or an electronic conductor encapsulation layer.

6. The cathode lithium-supplementing additive according to claim 5, wherein a material of the electronic conductor encapsulation layer includes at least one of a carbon material, a conductive polymer, or a conductive oxide.

7. The cathode lithium-supplementing additive according to claim 5, wherein a material of the ionic conductor encapsulation layer includes at least one of a perovskite solid electrolyte, a NASICON solid electrolyte, a garnet solid electrolyte or a polymer solid electrolyte.

8. The cathode lithium-supplementing additive according to claim 5, wherein a material of the isolating encapsulation layer includes at least one of a ceramic, a high molecular polymer, or a carbon material.

9. A preparation method for a cathode lithium-supplementing additive, **characterized in that** comprising the following steps:
preparing a Li₈FePO₄ material under an inert atmosphere; and
encapsulating, under an inert atmosphere, the Li₈FePO₄ material and forming an isolating conductive encapsulation layer on a surface of the Li₈FePO₄ material to obtain a cathode lithium-supplementing additive having a core-shell structure.

10. The preparation method for a cathode lithium-supplementing additive according to claim 9, wherein the step of forming an isolating conductive encapsulation layer on a surface of the Li₈FePO₄ material comprises: forming an isolating encapsulation layer and an ionic conductor encapsulation layer and /or electronic conductor encapsulation layer on the surface of the Li₈FePO₄ material.

11. The preparation method for a cathode lithium-supplementing additive according to claim 9 or 10, wherein preparing the Li₈FePO₄ material includes:
dissolving, under an inert atmosphere, Li₃P and Li₅FeO₄ into an organic solvent to carry out a grinding and mixing treatment, and drying followed by a sintering treatment to obtain the Li₈FePO₄ material.

12. The preparation method for a cathode lithium-supplementing additive according to claim 11, wherein the step of dissolving Li₃P and Li₅FeO₄ into an organic solvent includes: dissolving the Li₃P and the Li₅FeO₄ into the organic solvent according to a stoichiometric ratio of Li₈FePO₄.

13. The preparation method for a cathode lithium-supplementing additive according to claim 11, wherein the organic solvent is at least one selected from butyl acetate, cyclohexane, and N-methylpyrrolidone.

14. The preparation method for a cathode lithium-supplementing additive according to claim 11, wherein conditions of the grinding and mixing treatment include: ball milling a mixed organic solution of Li₃P and Li₅FeO₄ for 1 to 20 hours under a ball-to-material ratio of (1-10):1.

15. The preparation method for a cathode lithium-supplementing additive according to claim 11, wherein conditions of the sintering treatment include: sintering at a temperature of 500 to 900°C for 3 to 12 hours in an inert atmosphere.

16. The preparation method for a cathode lithium-supplementing additive according to claim 11, wherein before coating the Li₈FePO₄ material, the method further includes crushing the Li₈FePO₄ material.

17. A cathode sheet, **characterized in that** comprising the cathode lithium-supplementing additive according to any one of claims 1 to 8, or a cathode lithium-supplementing additive prepared by the preparation method according to any one of claims 9 to 16.

18. The cathode sheet according to claim 17, wherein the cathode sheet includes a current collector and an active material layer stacked with each other, and a mass percentage of the cathode lithium-supplementing additive in the active material layer is 0.2 to 10%.

19. A secondary battery, **characterized in that** comprising the cathode sheet according to any one of claims 17 to 18.
